# EUROPEAN PATENT SPECIFICATION

(11) **EP 0 930 152 B1**
(45) Date of publication and mention of the grant of the patent: **30.03.2005**
(21) Application number: 99100124.9
(22) Date of filing: 05.01.1999
(51) Int. Cl.: B30B 9/12, B30B 9/16, B01D 33/27, B01D 29/23

(54) **Screw press for dehydrating products containing moisture**
Entwässerungsschneckenpresse für Feuchtigkeit enthaltende Produkte
Presse à vis pour la déshydratation de produits humides

(30) Priority: 15.01.1998 IT MI980066
(43) Date of publication of application: 21.07.1999
(73) Proprietor: BABBINI SRL, 47012 Civitella di Romagna (FC) (IT)
(72) Inventor: BABBINI SRL, 47012 Civitella di Romagna (FC) (IT)
(74) Representative: Modiano, Guido, Dr.-Ing.

(56) References cited:
- EP-A- 0 553 783
- EP-A- 0 773 100
- FR-A- 2 224 591
- GB-A- 917 777
- US-A- 3 616 932
- US-A- 4 565 124
- US-A- 5 662 035

## Description

The present invention relates to a screw press for dehydrating products containing moisture.

Screw presses are known for dehydrating products containing moisture, particularly for dehydrating depleted pulps which are a byproduct of the processing of beetroots to produce sugar (see for instance the document EP-A-0 773 100).

These presses are generally constituted by an enclosure composed of two portions which are arranged side by side and form two conical surfaces with horizontal axes which are arranged side by side and mutually intersect by way of their mutually facing regions. Each one of the two portions of the enclosure coaxially accommodates a substantially frustum-shaped shaft whose diameter decreases in the opposite direction with respect to the decrease in diameter of the two portions of the enclosure and has, on its lateral surface, a screw which is inscribed in the corresponding portion of the enclosure and protrudes, with its turns, between the turns of the screw of the contiguous shaft. Proximate to the larger-diameter end of the two portions of the enclosure there is provided an inlet for introducing the products to be dehydrated. The product, as a consequence of the rotary actuation of the shafts in two mutually opposite directions about their respective axes, are gradually pushed forward inside the enclosure from the larger-diameter end of the two conical portions towards the smaller-diameter end. During advancement, the products, as a consequence of the reduction in the passage section, undergo a gradual compression which expels the liquid fraction of the product from the pulp. The liquid fraction can drip out of the enclosure, if the two portions that compose it are formed with a cage-like structure, or is collected inside the shafts, which are conveniently hollow and have a perforated lateral surface, and is then discharged at a longitudinal end of the shafts.

The particular geometry of the frustum-shaped shafts, of the corresponding screw inscribed in a conical surface, and of the enclosure with conical portions around the screws of the shafts produces both the advancement of the product along the shafts in an axial direction and its gradual compression.

In these presses the discharge of the liquid produced by pressing the product is crucial, since inadequate drainage of the liquid and any slowing or stoppage of the product during its advancement along the shafts, for example because the shafts drag the product so that it rotates with them, can reduce the compression to which the product is subjected, and therefore the liquid can be sucked up by the pulp, significantly reducing the effectiveness of the pressing.

In order to improve drainage of the liquid fraction as much as possible, some presses adopt a cage-like structure for the portions of the enclosure that surround the screw of the shafts and hollow shafts with a perforated lateral surface.

However, these refinements are often insufficient to achieve a fully satisfactory drainage of the liquid fraction of the product during pressing.

On the other hand, increasing the perforations in the shafts in order to increase drainage would cause an excessive reduction in the resisting cross-section of the shafts and would impose a limitation on the pressing forces in order to avoid shaft failure.

The aim of the present invention is to solve the above problem by providing a screw press for dehydrating products containing moisture which significantly improves the drainage of the liquid produced by pressing, achieving higher effectiveness in pressing the products.

Within the scope of this aim, an object of the invention is to provide a screw press which can improve the drainage of the liquid fraction of the product without reducing the resisting cross-section of the shafts.

Another object of the present invention is to provide a screw press which can be obtained from currently commercially available screw presses by means of modifications which are simple to perform.

This aim, these objects and others which will become apparent hereinafter are achieved by a screw press for dehydrating products containing moisture, comprising an enclosure composed of two portions which are arranged side by side and form two substantially conical or cylindrical surfaces which mutually intersect by means of their mutually facing regions, each one of said two portions of the enclosure coaxially accommodating a substantially cylindrical or frustum-shaped shaft which has, on its lateral surface, a screw which is inscribed in the corresponding portion of the enclosure and protrudes, with its turns, between the turns of the screw of the adjacent shaft; said enclosure having, proximate to the larger-diameter end of said two portions, an inlet for introducing in said enclosure products to be dehydrated, characterized in that between the lateral surface of at least one of said two shafts and the corresponding portion of the enclosure there is at least one perforated duct for collecting at least part of the liquid produced by pressing.

Further characteristics and advantages of the present invention will become apparent from the following detailed description of a preferred but not exclusive embodiment of the press according to the invention, illustrated only by way of non-limitative example in the accompanying drawings, wherein:
Figure 1 is a partially sectional schematic lateral elevation view of the press according to the present invention;
Figure 2 is a partially sectional schematic top plan view of the press according to the invention;
Figure 3 is an enlarged-scale sectional view of a portion of the press according to the invention, taken along a longitudinal plane;
Figures 4 to 6 are enlarged-scale longitudinal sectional views of portions of the press according to the invention, with some variations of the perforated duct;
Figure 7 is a sectional view, taken along an axial plane, of an end portion of one of the shafts of the press;
Figure 8 is sectional view of Figure 7, taken along the plane VIII-VIII;
Figure 9 is a view of a different embodiment of the end portion of the perforated duct proximate to an end portion of one of the shafts of the press;
Figure 10 is a sectional view of Figure 9, taken along the plane X-X;
Figure 11 is a view, similar to Figures 3 to 6, of another embodiment of the perforated duct;
Figure 12 is a partially sectional perspective view of a portion of a shaft of the press according to the invention, to which another embodiment of the perforated duct is applied;
Figure 13 is a transverse sectional view of the shaft of Figure 12.

With reference to the above figures, the press according to the invention, generally designated by the reference numeral 1, comprises a structure 2 which supports an enclosure composed of two portions 3 and 4 which are arranged side by side and form two conical or cylindrical surfaces which have substantially horizontal axes and mutually intersect with their mutually facing regions. Each one of the two portions 3 and 4 coaxially accommodates a shaft 5 and 6 which has a substantially cylindrical or frustum-shaped configuration and has, on its lateral surface, a screw 7, 8 which is inscribed in the corresponding portion 3, 4 of the enclosure and protrudes, with its turns, between the turns of the screw of the contiguous shaft.

The portions 3 and 4 can form two cylindrical surfaces and the shafts 5 and 6 can have a frustum-shaped configuration, or viceversa, but preferably, as shown, the portions 3 and 4 form two conical surfaces and each shaft 5 and 6 has a cross-section whose diameter gradually increases starting from the larger end of the portion 3 and 4 of the enclosure in which it is accommodated.

The height of the turns of the screw 7 and 8 decreases gradually along the extension of the corresponding shaft starting from the smaller-diameter end, so that its external profile remains adjacent to the internal surface of the portion 3 and 4 of the enclosure in which it is accommodated.

Proximate to the larger-diameter end of the portions 3 and 4 of the enclosure there is provided an inlet 9 for introducing the products to be dehydrated into said enclosure.

The portions 3 and 4 of the enclosure can be formed with a cage-like structure, so as to allow the liquid fraction of the product to flow out through the side walls of the enclosure.

Below the enclosure there is provided a tank 10 for collecting the liquid fraction of the product and the bottom of the tank is provided with a discharge port 11.

Preferably, the shafts 5 and 6 are hollow and have a plurality of perforations on their lateral surface, so as to allow the passage of the liquid fraction of the product, which is discharged at an axial end of the shafts in a per se known manner which is not shown for the sake of simplicity.

The shafts 5,6 are supported by the framework 2 so that they can rotate about their own axes and are actuated, with a rotary motion about their respective axes, with mutually opposite directions of rotation by means of one or more motors 12 which are connected to one end of the shafts 5 and 6 by means of suitable reduction units 13.

According to the present invention, in the region that lies between at least one of the shafts 5 and 6 and the corresponding portion 3 and 4 of the enclosure, at least one perforated duct 15, 16, 17 and 18, 19, 23 is provided for collecting at least part of the liquid produced by pressing.

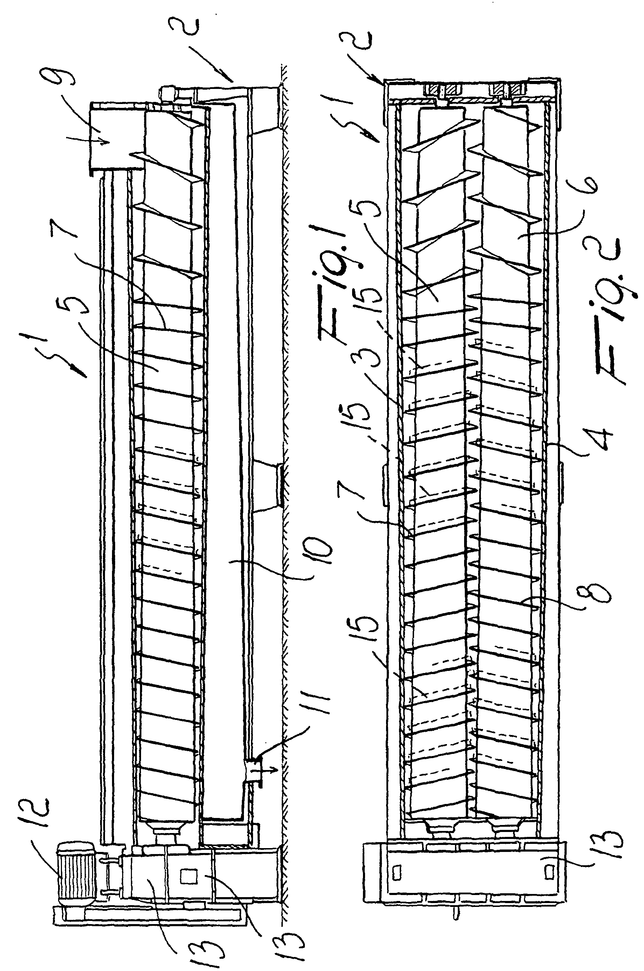

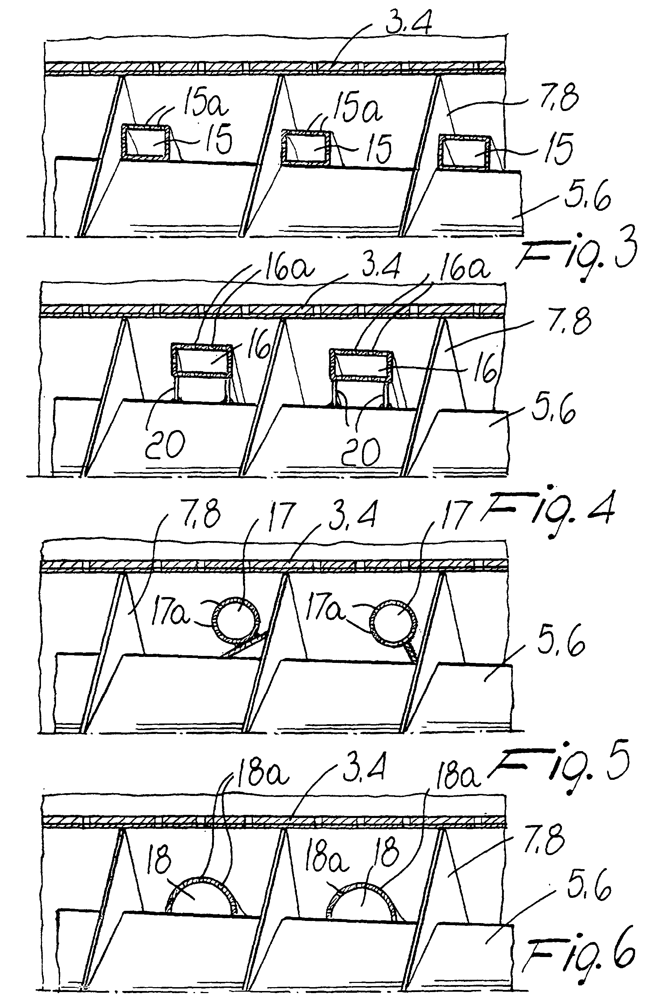

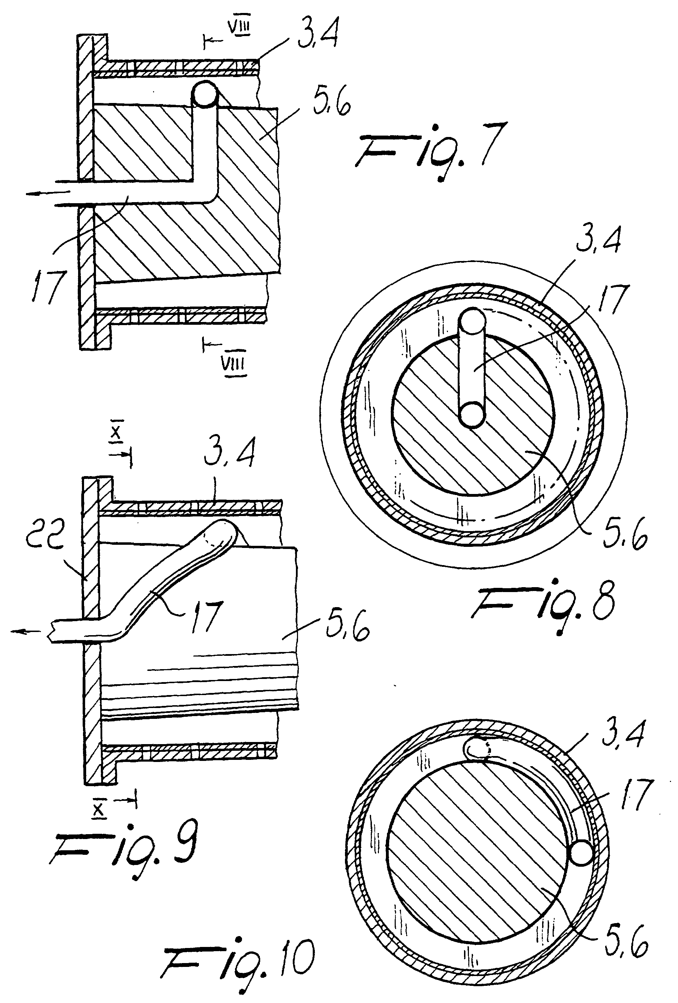

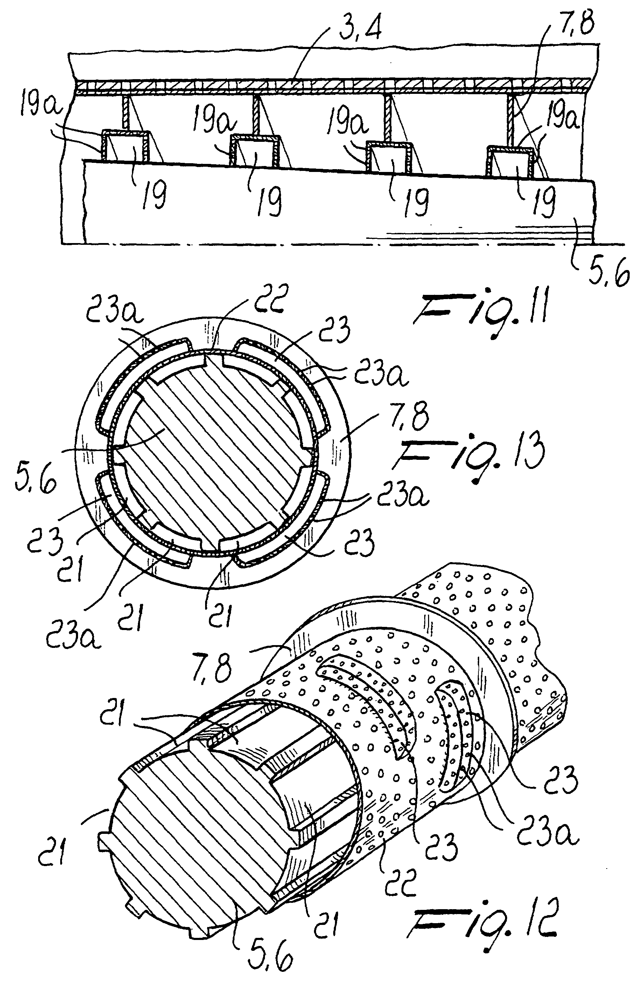

The perforated duct can have a rectangular transverse cross-section, as shown in particular in Figures 3 and 4, or a circular cross-section, as shown in Figure 5, or a semicircular cross-section, as shown in Figure 6, or a polygonal shape.

The perforated duct 15, as shown in particular in Figure 3, can be connected, with one of its sides, to the lateral surface of the corresponding shaft 5 and 6 and optionally also to one side of a turn of the corresponding screw.

As shown in particular in Figure 4, the perforated duct 16 can be supported, so as to be spaced from the lateral surface of the corresponding shaft 5 and 6, by means of suitable supporting feet 20.

As shown in Figure 5, the perforated duct 17 can also be supported by plates arranged in the corner region between the lateral surface of the shaft 5 and 6 and the side of the turn of the corresponding screw.

As shown in Figure 11, the perforated duct 19 can be connected to the lateral surface of the shaft at the screw 7 and 8 and can support the screw directly.

The surface of the perforated duct 15, 16, 17, 18, 19 and 23 that is meant to make contact with the product is provided with a plurality of holes 15a, 16a, 17a, 18a, 19a, 23a to allow the liquid fraction of the product to flow into the perforated duct.

It should be observed that the perforated duct 15, 16, 17, 18, 19, 23 can have a cross-section for the passage of the liquid fraction of the product which decreases from one end to the other of the corresponding shaft 5 and 6, so as to match the reduction in the height of the corresponding screw 7 and 8.

The perforated duct 15, 16, 17, 18 and 19 has an end for delivering the collected liquid and said delivery end, as shown in particular in Figures 7 to 10, protrudes from an axial end of the corresponding shaft 5 and 6.

The perforated duct 15, 16, 17, 18 and 19 can also lie at least partially inside the corresponding shaft 5 and 6.

Preferably, the end portion of the perforated duct 15, 16, 17, 18, 19 lies, proximate to its delivery end, inside the corresponding shaft 5 and 6 and protrudes coaxially from an axial end of the corresponding shaft, as shown in particular in Figures 7 and 8.

As shown in particular in Figures 9 and 10, the end portion of the perforated duct 15, 16, 17, 18, 19 can also remain on the outside of the corresponding shaft 5 and 6 by providing, at the axial end of the shaft, a disk 22 for supporting the end portion of the perforated duct which rotates together with the corresponding shaft 5 and 6.

If the shafts 5 and 6 are internally hollow, the end of the perforated duct provided with the outlet for the liquid can also be simply connected to the inside of the corresponding shaft 5 and 6.

It should be observed that the perforated duct according to the invention can also affect just one of the shafts 5 and 6, although it is preferred to use one or more perforated ducts on both shafts 5 and 6.

The perforated duct can be continuous or split into segments along the extension of the corresponding shaft. As mentioned, the shafts 5 and 6 can be provided hollow or, as shown in Figures 12 and 13, can have, on their lateral surface, axial slots 21 which are closed toward the outside by a perforated metal plate 22, so as to constitute channels for collecting and removing the liquid produced by pressing and the perforated duct portions 23 can be connected either to the inside of the corresponding shaft 5 and 6 or to the channels formed by the slots 21 for removing the collected liquid.

Operation of the press according to the present invention is as follows.

The products to be dehydrated are introduced in the enclosure that contains the shafts 5 and 6 through the inlet 9.

The rotation of the shafts 5 and 6 about their corresponding axes in mutually opposite directions causes the gradual advancement of the products inside the portions 3 and 4 of the enclosure with a predominantly axial movement.

The gradual reduction of the product passage section between the shafts 5 and 6 and the internal walls of the portions 3 and 4 of the enclosure produces the pressing of the product and the consequent release of the liquid fraction.

The liquid fraction of the product is collected inside the perforated duct 15, 16, 17, 18, 19, 23 and is discharged externally.

If the portions 3 and 4 of the enclosure have a cage-like structure, part of the liquid fraction is discharged externally and collected in the tank 10. If the shafts 5 and 6 are hollow with a perforated lateral surface, another part of the liquid fraction can be collected inside the shafts 5 and 6 and conveyed externally in a per se known manner.

The presence of one or more perforated ducts according to the invention between the turns 7 and 8 of the screw of the shafts 5 and 6 allows to achieve highly effective pressing, since as the liquid fraction of the product is released by the product due to pressing, it is removed from the product and can no longer be reabsorbed by it and does not hinder the release of further liquid, thus achieving a higher pressing yield.

The dehydrated product is removed in a per se known manner at the end of the enclosure that lies opposite to the inlet 9.

In practice it has been observed that the press according to the present invention fully achieves the intended aim, since it achieves higher effectiveness and a better yield in the pressing of products for dehydration.

It should be observed that although the basic concept of the present invention has been described in particular for a press with horizontal shafts, it can in any case be employed advantageously on presses having shafts provided with a vertical axis.

The press thus conceived is susceptible of numerous modifications and variations, within the scope of the appended claims.

In practice, the materials employed, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A screw press (1) for dehydrating products containing moisture, comprising an enclosure composed of two portions (3, 4) which are arranged side by side and form two substantially conical or cylindrical surfaces which mutually intersect by means of their mutually facing regions, each one of said two portions of the enclosure coaxially accommodating a substantially cylindrical or frustum-shaped shaft (5, 6) which has, on its lateral surface, a screw (7, 8) which is inscribed in the corresponding portion of the enclosure and protrudes, with its turns, between the turns of the screw of the adjacent shaft; said enclosure having, proximate to the larger-diameter end of said two portions, an inlet (9) for introducing in said enclosure products to be dehydrated, **characterized in that** between the lateral surface of at least one of said two shafts and the corresponding portion the enclosure there is provided at least one perforated duct (15, 16, 17, 18, 19, 23) for collecting at least part of the liquid produced by pressing.

2. The press according to claim 1, **characterized in that** said enclosure is composed of two portions arranged side by side which form two substantially conical surfaces, said shafts having a substantially frustum-shaped configuration with a cross-section whose diameter increases gradually starting from the larger end of the portion of the enclosure in which they are accommodated.

3. The press according to claim 1, **characterized in that** it comprises at least one perforated duct for each shaft.

4. The press according to claim 3, **characterized in that** said at least one perforated duct has an end for delivering the collected liquid, said delivery end protruding from a longitudinal end of the corresponding shaft.

5. The press according to claim 3, **characterized in that** said shafts are hollow, said at least one perforated duct being connected to the inside of the corresponding shaft.

6. The press according to claim 3, **characterized in that** said shafts are hollow, said at least one perforated duct being arranged partially inside the corresponding shaft.

7. The press according to claim 3, **characterized in that** said at least one perforated duct is composed of a plurality of portions of perforated duct which are connected to the lateral surface of said shafts and are connected to at least one channel formed in the corresponding shaft.

8. The press according to claim 3, **characterized in that** said at least one perforated duct is arranged so that its end portion, proximate to its delivery end, lies inside the corresponding shaft and protrudes coaxially from an axial end of the corresponding shaft.

9. The press according to claim 1, **characterized in that** said portions of said enclosure have a cage-like structure.

10. The press according to claim 1, **characterized in that** said shafts are hollow and have a perforated lateral surface for collecting part of the liquid produced by pressing.

11. The press according to claim 3, **characterized in that** said at least one perforated duct has a cross-section which decreases from the larger-diameter end toward the smaller end of the corresponding shaft.

12. The press according to claim 3, **characterized in that** said at least one perforated duct is connected to the lateral surface of the corresponding shaft.

13. The press according to claim 3, **characterized in that** said at least one perforated duct is connected to one side of the turns of the screw of the corresponding shaft.

14. The press according to claim 3, **characterized in that** said at least one perforated duct is connected to the lateral surface of the corresponding shaft at the region for connection to the corresponding screw.

15. The press according to claim 3, **characterized in that** said at least one perforated duct has a substantially circular transverse cross-section.

16. The press according to claim 3, **characterized in that** said at least one perforated duct has a substantially semicircular transverse cross-section.

17. The press according to claim 3, **characterized in that** said at least one perforated duct has a substantially rectangular transverse cross-section.

18. The press according to claim 3, **characterized in that** said at least one perforated duct has a polygonal transverse cross-section.

## Patentansprüche

1. Schneckenpresse (1) zum Dehydrieren von Feuchtigkeit enthaltenen Produkten mit einem aus zwei Teilen (3,4) gebildeten Gehäuse, die nebeneinander angeordnet sind, und zwei im wesentlichen konische oder zylindrische Oberflächen bilden, die sich gegenseitig mit Mitteln von ihren gegenseitig zugewandten Bereichen schneiden, wobei jeder der genannten beiden Bereiche des Gehäuses koaxial eine im wesentlichen zylindrische oder kegelstumpfförmige Welle (5,6) beherbergt mit einer Schraube (7,8) auf ihrer äußeren Oberfläche, die eingeschrieben ist in den korrespondieren Teil des Gehäuses und die mit ihren Windungen zwischen die Windungen der Schraube der benachbarten Welle ragt; wobei das Gehäuse nahe des Endes mit größerem Durchmesser der beiden Teile einen Einlaß (9) zum Einbringen des zu dehydrierenden Produktes in das genannte Gehäuse aufweist,
**dadurch gekennzeichnet,**
**daß** zwischen der äußeren Oberfläche von wenigstens einem der beiden genannten wellen und dem korrespondierenden Bereich des Gehäuses wenigstens ein perforierter Kanal (15, 16, 17, 18, 19, 23) zum Sammeln wenigstens eines Teiles der Flüssigkeit vorgesehen ist, die durch das Pressen produziert wird.

2. Presse nach Anspruch 1,
**dadurch gekennzeichnet,**
**daß** das genannte Gehäuse von zwei nebeneinander angeordneten Teilen gebildet wird, die im wesentlichen zwei konische Oberflächen bilden, wobei die genannten Wellen eine im wesentlichen kegelstumpfförmige Konfiguration aufweisen mit einem Querschnitt, dessen Durchmesser allmählich zunimmt beginnend von dem größeren Ende des Bereiches des Gehäuses, in dem sie untergebracht sind.

3. Presse nach Anspruch 1,
**dadurch gekennzeichnet,**
**daß** sie wenigstens einen perforierten Kanal für jede welle aufweist.

4. Presse nach Anspruch 3,
**dadurch gekennzeichnet,**
**daß** wenigstens der eine genannte perforierte Kanal ein Ende aufweist zum Austragen der gesammelten Flüssigkeit, wobei dieses Abgabeende von dem Längsende der korrespondierenden Welle hervorsteht.

5. Presse nach Anspruch 3,
**dadurch gekennzeichnet,**
**daß** die genannten Wellen hohl sind, wobei wenigstens ein perforierter Kanal mit der Innenseite der korrespondierenden Welle verbunden ist.

6. Presse nach Anspruch 3,
**dadurch gekennzeichnet,**
**daß** die genannten Wellen hohl sind, wobei wenigstens ein perforierter Kanal sich teilweise im Inneren der korrespondierenden Welle befindet.

7. Presse nach Anspruch 3,
**dadurch gekennzeichnet,**
**daß** wenigstens ein perforierter Kanal aus einer Mehrzahl von Bereichen von perforierten Kanälen gebildet ist, die mit der äußeren Oberfläche der genannten Wellen verbunden sind und mit wenigstens einem Kanal verbunden sind, der in der korrespondierenden welle ausgebildet ist.

8. Presse nach Anspruch 3,
**dadurch gekennzeichnet,**
**daß** wenigstens ein perforierter Kanal so ausgebildet ist, daß sein Endbereich benachbart zu seinem Abgabeende im Inneren der korrespondierenden Welle liegt und koaxial von einem axialen Ende der korrespondierenden Welle hervorsteht.

9. Presse nach Anspruch 1,
**dadurch gekennzeichnet,**
**daß** die genannten Bereiche des genannten Gehäuses eine käfigähnliche Struktur aufweisen.

10. Presse nach Anspruch 1,
**dadurch gekennzeichnet,**
**daß** die genannten Wellen hohl sind und zum Auffangen von Teilen der Flüssigkeit, die durch das Pressen erzeugt wird, eine perforierte äußere Oberfläche aufweisen.

11. Presse nach Anspruch 3,
**dadurch gekennzeichnet,**
**daß** wenigstens ein perforierter Kanal einen Querschnitt aufweist, der von dem größeren Durchmesserende in Richtung auf das kleinere Ende der korrespondierenden Welle abnimmt.

12. Presse nach Anspruch 3,
**dadurch gekennzeichnet,**
**daß** wenigstens ein perforierter Kanal mit der äußeren Oberfläche der korrespondierenden Welle verbunden ist.

13. Presse nach Anspruch 3,
**dadurch gekennzeichnet,**
**daß** wenigstens ein perforierter Kanal mit einer Seite der Schraubenwindung der korrespondierenden Welle verbunden ist.

14. Presse nach Anspruch 3,
**dadurch gekennzeichnet,**
**daß** wenigstens ein perforierter Kanal mit der äußeren Oberfläche der korrespondierenden Welle im Verbindungsbereich der korrespondierenden Schraube verbunden ist.

15. Presse nach Anspruch 3,
**dadurch gekennzeichnet,**
**daß** wenigstens ein perforierter Kanal einen im wesentlichen kreisförmigen Querschnitt aufweist.

16. Presse nach Anspruch 3,
**dadurch gekennzeichnet,**
**daß** wenigstens ein perforierter Kanal einen im wesentlichen halbkreisförmigen Querschnitt aufweist.

17. Presse nach Anspruch 3,
**dadurch gekennzeichnet,**
**daß** wenigstens ein perforierter Kanal einen im wesentlichen rechteckigen Querschnitt aufweist.

18. Presse nach Anspruch 3,
**dadurch gekennzeichnet,**
**daß** wenigstens ein perforierter Kanal einen polygonalen Querschnitt aufweist.

## Revendications

1. Presse à vis (1) pour la déshydratation de produits humides, comprenant une enveloppe composée de deux parties (3, 4) qui sont agencées côte à côte et forment deux surfaces cylindriques ou sensiblement coniques qui s'entrecoupent mutuellement au moyen de leur régions se faisant mutuellement face, chacune desdites deux parties de l'enveloppe logeant de manière coaxiale un arbre (5, 6) de forme tronconique ou sensiblement cylindrique qui a, sur sa surface latérale, une vis (7, 8) qui est inscrite dans la partie correspondante de l'enveloppe et fait saillie avec ses spirales, entre les spirales de la vis de l'arbre adjacent ; ladite enveloppe comprenant, à proximité de l'extrémité à plus grand diamètre desdites deux parties, une entrée (9) pour introduire dans ladite enveloppe, des produits à déshydrater, **caractérisée en ce qu'**entre la surface latérale du au moins un desdits deux arbres et la partie correspondante de l'enveloppe, on prévoit au moins une conduite perforée (15, 16, 17, 18, 19, 23) pour recueillir au moins une partie du liquide produit par le pressage.

2. Presse selon la revendication 1, **caractérisée en ce que** ladite enveloppe est composée de deux parties agencées côte à côte qui forment deux surfaces sensiblement coniques, lesdits arbres ayant une configuration sensiblement de forme tronconique avec une section transversale dont le diamètre augmente progressivement en commençant par l'extrémité supérieure de la partie de l'enveloppe dans laquelle ils sont logés.

3. Presse selon la revendication 1, **caractérisée en ce qu'**elle comprend au moins une conduite perforée pour chaque arbre.

4. Presse selon la revendication 3, **caractérisée en ce que** ladite au moins une conduite perforée possède une extrémité pour délivrer le liquide collecté, ladite extrémité de distribution faisant saillie à partir d'une extrémité longitudinale de l'arbre correspondant.

5. Presse selon la revendication 3, **caractérisée en ce que** lesdits arbres sont creux, ladite au moins une conduite perforée étant raccordée à l'intérieur de l'arbre correspondant.

6. Presse selon la revendication 3, **caractérisée en ce que** lesdits arbres sont creux, ladite au moins une conduite perforée étant agencée partiellement à l'intérieur de l'arbre correspondant.

7. Presse selon la revendication 3, **caractérisée en ce que** ladite au moins une conduite perforée est composée de plusieurs parties de conduite perforée qui sont raccordées à la surface latérale desdits arbres et sont raccordées à au moins un canal formé dans l'arbre correspondant.

8. Presse selon la revendication 3, **caractérisée en ce que** ladite au moins une conduite perforée est agencée de sorte que sa partie d'extrémité, à proximité de son extrémité de distribution, se trouve à l'intérieur de l'arbre correspondant et fait saillie de manière coaxiale à partir d'une extrémité axiale de l'arbre correspondant.

9. Presse selon la revendication 1, **caractérisée en ce que** lesdites parties de ladite enveloppe ont une structure en forme de cage.

10. Presse selon la revendication 1, **caractérisée en ce que** lesdits arbres sont creux et possèdent une surface latérale perforée pour collecter une partie du liquide produit par pressage.

11. Presse selon la revendication 3, **caractérisée en ce que** ladite au moins une conduite perforée a une section transversale qui diminue à partir de l'extrémité à plus grand diamètre vers l'extrémité inférieure de l'arbre correspondant.

12. Presse selon la revendication 3, **caractérisée en ce que** ladite au moins une conduite perforée est raccordée à la surface latérale de l'arbre correspondant.

13. Presse selon la revendication 3, **caractérisée en ce que** ladite au moins une conduite perforée est raccordée d'un côté des spirales de la vis de l'arbre correspondant.

14. Presse selon la revendication 3, **caractérisée en ce que** ladite au moins une conduite perforée est raccordée à la surface latérale de l'arbre correspondant au niveau de la région pour le raccordement à la vis correspondante.

15. Presse selon la revendication 3, **caractérisée en ce que** ladite au moins une conduite perforée a une section transversale sensiblement circulaire.

16. Presse selon la revendication 3, **caractérisée en ce que** ladite au moins une conduite perforée a une section transversale sensiblement semi-circulaire.

17. Presse selon la revendication 3, **caractérisée en ce que** ladite au moins une conduite perforée a une section transversale sensiblement rectangulaire.

18. Presse selon la revendication 3, **caractérisée en ce que** ladite au moins une conduite perforée a une section transversale polygonale.
